# EUROPEAN PATENT SPECIFICATION

(11) **EP 2 705 193 B1**
(45) Date of publication and mention of the grant of the patent: **13.04.2016**
(21) Application number: 12779615.9
(22) Date of filing: 01.05.2012
(51) Int. Cl.: D06Q 1/00, B32B 37/02

(54) **HOLOGRAPHIC PATTERNED HEAT MANAGEMENT MATERIAL**
HOLOGRAPHISCH GEMUSTERTES WÄRMEMANAGEMENTMATERIAL
MATIÈRE À GESTION THERMIQUE À MOTIF HOLOGRAPHIQUE

(30) Priority: 04.05.2011 US 201113101021
(43) Date of publication of application: 12.03.2014
(73) Proprietor: Columbia Sportswear North America, Inc., Portland, OR 97229 (US)
(72) Inventor: BLACKFORD, Michael "Woody", E., Portland OR 97229 (US)
(74) Representative: Leinweber & Zimmermann
(86) International application number: PCT/US2012/036005
(87) International publication number: WO 2012/151213

(56) References cited:
- WO-A2-2010/129923
- GB-A- 2 287 225
- JP-A- 2008 089 863
- US-A- 4 622 253
- US-A- 5 643 678
- US-A1- 2005 077 618
- US-A1- 2011 203 783
- US-B1- 6 191 056
- US-B1- 6 432 244

## Description

### Technical Field

Embodiments of the present disclosure relate generally to a fabric or other material used for body gear and other goods having designed performance characteristics, and in particular to methods and apparatuses that utilize a pattern of heat managing/directing elements coupled to a base fabric to manage heat through reflection or conductivity while maintaining the desired properties of the base fabric.

### Background

Currently, heat reflective materials such as aluminum and mylar typically take the form of a unitary solid film that is glued or otherwise attached to the interior of a garment, such as a jacket. The purpose of this layer is to inhibit thermal radiation by reflecting the body heat of the wearer and thereby keeping the garment wearer warm in colder conditions. However, these heat reflective linings do not transfer moisture vapor or allow air passage, thus they trap moisture near the body. Because the application of a heat reflective material impedes the breathability and other functions of the underlying base fabric, use of heat reflective materials during physical activity causes the inside of a garment to become wet, thereby causing discomfort and accelerating heat loss due to the increased heat conductivity inherent in wet materials. Further, these heat reflective coated materials impair the ability of the material to stretch, drape, or hang in a desired fashion.

WO 2010/129923 A2 discloses a heat management material for use with a body gear comprising a base material and an array of heat-directing elements. The base material has transfer properties to allow, impede and/or restrict passage of a natural element, like air, moisture, water, vapor or heat through the base material. The heat directing elements are positioned on one side of the base material to direct heat in a desired direction, and their placement and spacing helps enable the base material to perform the element transfer property.

US 6,432,244 B1 discloses a method for producing a holographic material, and a laser can be used to produce the holographic image.

### Brief Description of the Drawings

Embodiments of the present disclosure will be readily understood by the following detailed description in conjunction with the accompanying drawings.

Embodiments of the invention are illustrated by way of example and not by way of limitation in the figures of the accompanying drawings.
**Figure 1A** illustrates an upper body garment such as a coat having a lining of base material with heat-directing elements disposed thereon, in accordance with various embodiments.
**Figures 1B-1E** illustrate various views of examples of patterned heat-directing elements disposed on a base fabric or material, in accordance with various embodiments;
**Figures 2A** and **2B** illustrate examples of patterned heat-directing elements disposed on a base fabric, in accordance with various embodiments;
**Figures 3A-3E** illustrate examples of patterned heat-directing elements disposed on a base fabric, in accordance with various embodiments;
**Figure 4** illustrates an upper body garment such as a coat having a lining of base material with heat-directing elements disposed thereon, in accordance with various embodiments;
**Figure 5** illustrates an upper body garment such as a coat having a lining of base material with heat-directing elements disposed thereon, in accordance with various embodiments;
**Figure 6** illustrates an upper body garment such as a coat having a lining of base material with heat-directing elements disposed thereon, in accordance with various embodiments;
**Figure 7** illustrates an upper body garment such as a coat having a lining of base material with heat-directing elements disposed thereon, in accordance with various embodiments;
**Figures 8A-D** illustrate various views of a patterned heat management material as used in a jacket, in accordance with various embodiments;
**Figure 9** illustrates an example of a patterned heat management material as used in a boot, in accordance with various embodiments;
**Figure 10** illustrates an example of a patterned heat management material as used in a glove, where the cuff is rolled outward to show the lining, in accordance with various embodiments;
**Figure 11** illustrates an example of a patterned heat management material as used in a hat, in accordance with various embodiments;
**Figure 12** illustrates an example of a patterned heat management material as used in a pair of pants, in accordance with various embodiments;
**Figure 13** illustrates an example of a patterned heat management material as used in a sock, in accordance with various embodiments;
**Figure 14** illustrates an example of a patterned heat management material as used in a boot, in accordance with various embodiments;
**Figures 15A** and **B** illustrate two views of a patterned heat management material as used in a reversible rain fly (**Figure 15A**) and as a portion of a tent body (**Figure 15B**), in accordance with various embodiments;
**Figures 16A-16D** illustrate examples of holographic patterned heat-directing elements disposed on a base fabric or material in a perspective view (**Figure 16A**), in a cross-sectional view (**Figure 16B**), in a face view (**Figure 16C**), and in use in a jacket lining (**Figure 16D**), in accordance with various embodiments;
**Figures 17A** and **17B** illustrate another example of holographic patterned heat-directing elements disposed on a base fabric or material in a perspective view (**Figure 17A**), and in use in a jacket lining (**Figure 17B**), in accordance with various embodiments; and
**Figures 18A** and **18B** illustrate another example of holographic patterned heat-directing elements disposed on a base fabric or material in a perspective view

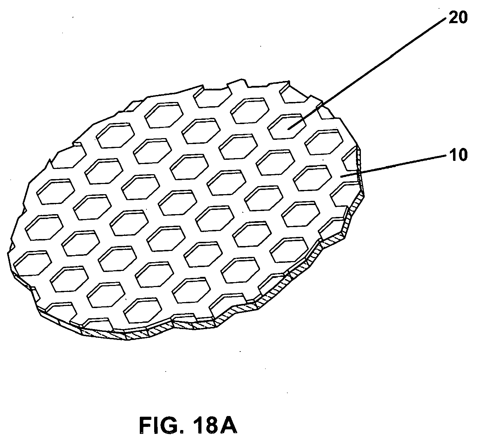

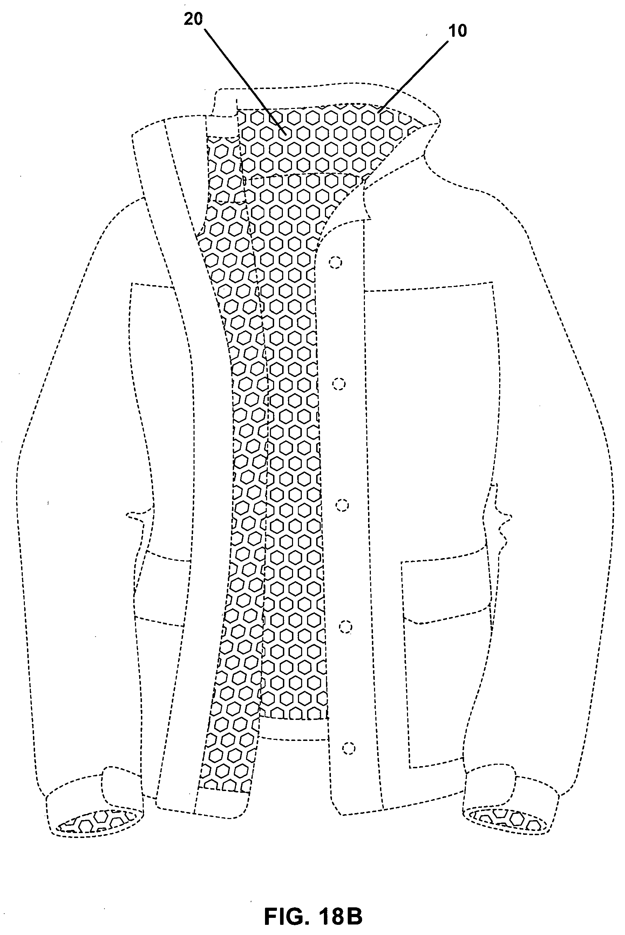

(**Figure 18A**), and in use in a jacket lining (**Figure 18B**), in accordance with various embodiments.

### Detailed Description of Embodiments

In the following detailed description, reference is made to the accompanying drawings which form a part hereof, and in which are shown by way of illustration embodiments in which the disclosure may be practiced. It is to be understood that other embodiments may be utilized and structural or logical changes may be made without departing from the scope of the present disclosure. Therefore, the following detailed description is not to be taken in a limiting sense, and the scopes of embodiments, in accordance with the present disclosure, are defined by the appended claims and their equivalents.

Various operations may be described as multiple discrete operations in turn, in a manner that may be helpful in understanding embodiments of the present invention; however, the order of description should not be construed to imply that these operations are order dependent.

The description may use perspective-based descriptions such as up/down, back/front, and top/bottom. Such descriptions are merely used to facilitate the discussion and are not intended to restrict the application of embodiments of the present invention.

The terms "coupled" and "connected," along with their derivatives, may be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still cooperate or interact with each other.

For the purposes of the description, a phrase in the form "A/B" or in the form "A and/or B" means (A), (B), or (A and B). For the purposes of the description, a phrase in the form "at least one of A, B, and C" means (A), (B), (C), (A and B), (A and C), (B and C), or (A, B and C). For the purposes of the description, a phrase in the form "(A)B" means (B) or (AB) that is, A is an optional element.

The description may use the phrases "in an embodiment," or "in embodiments," which may each refer to one or more of the same or different embodiments. Furthermore, the terms "comprising," "including," "having," and the like, as used with respect to embodiments of the present invention, are synonymous.

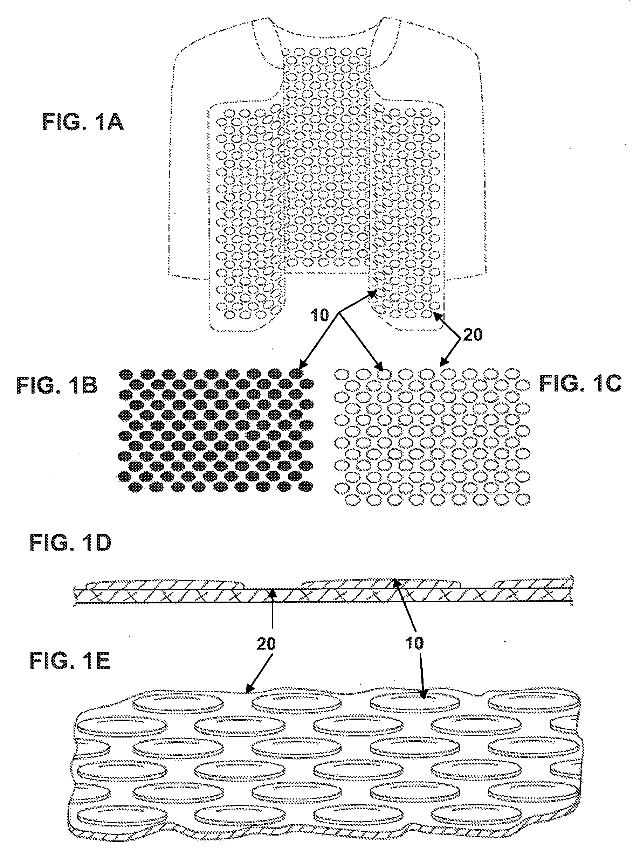

In various embodiments a material for body gear is disclosed that may use a pattern of heat-directing elements coupled to a base fabric to manage, for example, body heat by directing the heat towards or away from the body as desired, while still maintaining the desired transfer properties of the base fabric. For example, referring to **Figures 1B-1E**, in one embodiment, a plurality of heat management or heat-directing elements **10** may be disposed on a base fabric **20** in a generally non-continuous array, whereby some of the base fabric is exposed between adjacent heat-directing elements. The heat-directing function of the heat-directing elements may be generally towards the body through reflectivity or away from the body through conduction and/or radiation or other heat transfer property.

The heat-directing elements **10** may cover a sufficient surface area of the base fabric **20** to generate the desired degree of heat management (e.g. heat reflection toward the body to enhance warmth, or heat conductance away from the body to help induce cooling). A sufficient area of base fabric may be exposed to provide the desired base fabric function (e.g., stretch, drape, breathability, moisture vapor or air permeability, or wicking).

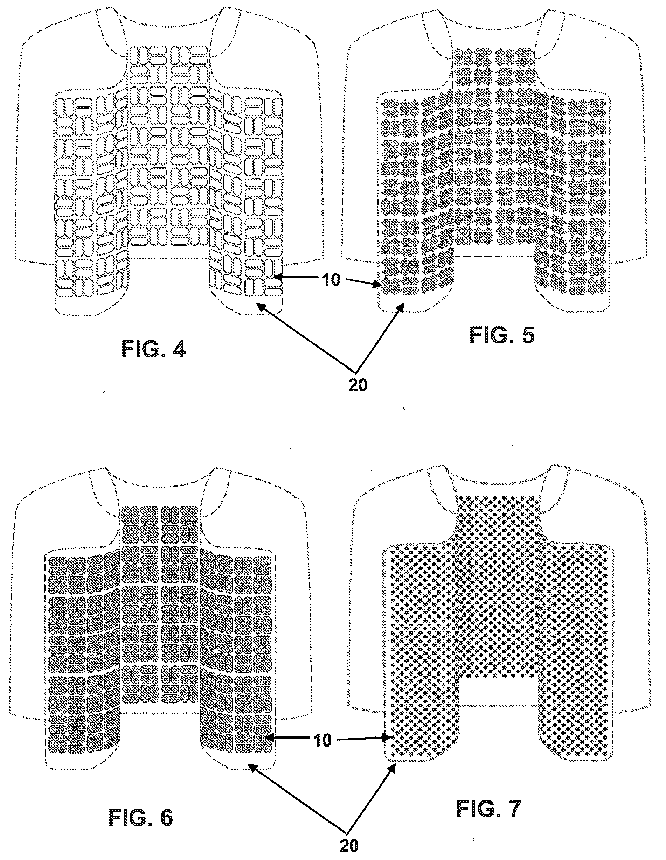

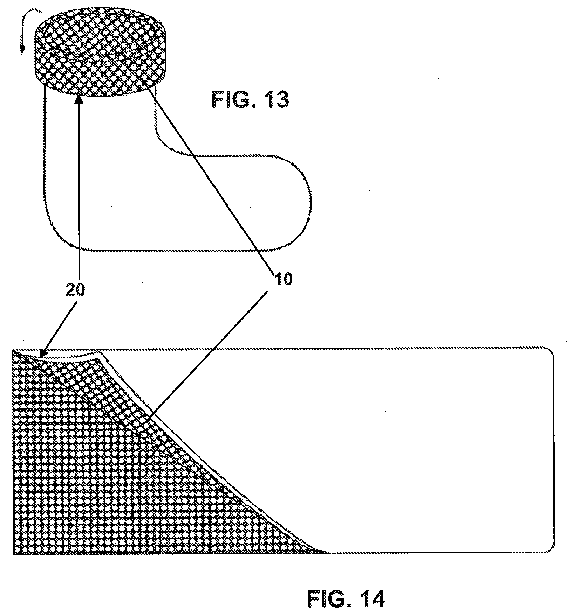

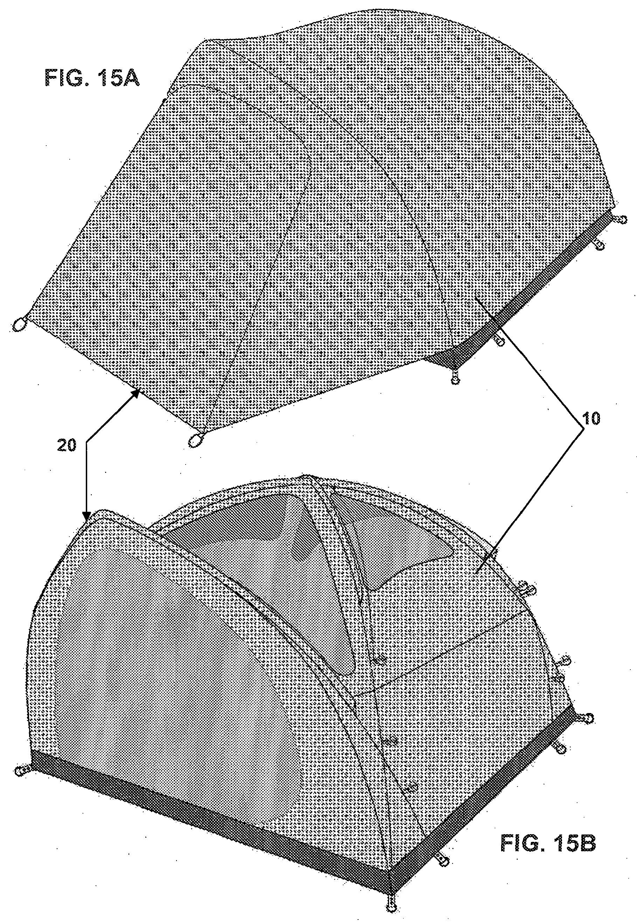

In accordance with various embodiments, the base fabric may be a part of any form of body gear, such as bodywear (*see, e.g*,. **Figures 1A** and **4****-13**), sleeping bags (*see*, *e.g*., **Figure 14**), blankets, tents (*see, e.g*., **Figure 15B**), rain flys (*see, e.g.*, **Figure 15A**) etc. Bodywear, as used herein, is defined to include anything worn on the body, including, but not limited to, outerwear such as jackets, pants, scarves, shirts, hats, gloves, mittens, and the like, footwear such as shoes, boots, slippers, and the like, sleepwear, such as pajamas, nightgowns, and robes, and undergarments such as underwear, thermal underwear, socks, hosiery, and the like.

In various embodiments, single-layer body gear may be used and may be comprised of a single layer of the base fabric, whereas other embodiments may use multiple layers of fabric, including one or more layers of the base fabric, coupled to one or more other layers. For instance, the base fabric may be used as a fabric lining for body gear.

In various embodiments, the array of heat-directing elements may be disposed on a base fabric having one or more desired properties. For example, the underlying base material may have properties such as air permeability, moisture vapor transfer and/or wickability, which is a common need for body gear used in both indoor and outdoor applications. In other embodiments, the separations between heat-directing elements help allow the base material to have a desired drape, look, and/or texture. In some embodiments, the separations between heat-directing elements may help allow the base material to stretch. Suitable base fabrics may include nylon, polyester, rayon, cotton, spandex, wool, silk, or a blend thereof, or any other material having a desired look, feel, weight, thickness, weave, texture, or other desired properly. In various embodiments, allowing a designated percentage of the base fabric to remain uncovered by the heat-directing elements may allow that portion of the base fabric to perform the desired functions, while leaving enough heat-directing element surface area to direct body heat in a desired direction, for instance away from or toward the body of a user.

For example, the heat-directing elements may be positioned in such a way and be made of a material that is conducive for directing heat generated by the body. In one embodiment, the heat-directing elements may be configured to reflect the user's body heat toward the user's body, which may be particularly suitable in cold environments. In another embodiment, the heat-directing elements may be configured to conduct the user's body heat away from the user's body, which may be particularly suitable in warmer environments. In particular embodiments, the heat-directing elements may be configured to generally reflect the user's body heat towards the user's body, but may also begin to conduct heat away from the user's body when the user begins to overheat.

In various embodiments, the base fabric may include heat-directing elements disposed on an innermost surface of the body gear such that the elements are disposed to face the user's body and thus are in a position to manage body heat, as discussed above (e.g., reflect heat or conduct heat). In some other embodiments, the heat-directing elements may be disposed on the exterior surface of the body gear and/or base fabric such that they are exposed to the environment, which may allow the heat-directing elements, for example, to reflect heat away from the user, while allowing the base fabric to adequately perform the desired functions. In some embodiments, the heat-directing elements may perform these functions without adversely affecting the stretch, drape, feel, or other properties of the base fabric.

According to this invention the heat-directing element may be a holographic heat-directing element, such as a holographic foil or embossed reflective surface. As used herein, in various embodiments, the term "holographic heat-directing element" may refer to a generally reflective metallic-colored element, such as a gold-colored, silver-colored, copper-colored, or other shiny metallic-colored element having a thin reflective or metallic layer (for example, from a few angstroms to a few microns thick), wherein the element may reflect heat and/or light in more than one direction. In some embodiments, a holographic heat-directing element may include a holographic image on its obverse side. For instance, in various embodiments, a holographic image may be produced by a laser-etched holographic foil. In other embodiments, a holographic element may produce non-specular reflection via an embossed pattern or collection of facets.

In various embodiments, a holographic foil may have a thin layer of adhesive material, such as a heat-sensitive adhesive, on its reverse side, although not all holographic foils include this layer. In various embodiments, the holographic foil may reflect a characteristic pattern of light when a light beam is directed at it. For instance, in various embodiments, a laser beam directed at a holographic foil of the present disclosure may reflect multiple light beams, such as 6-10 beams of light or even more, depending on the specific holographic pattern used. The holographic foil may also reflect other energy waves, other than light. In various embodiments, when located on an interior surface of a piece of body wear, the holographic heat-directing elements disclosed herein may direct a greater percentage of the body's heat back towards the body of the user, when compared to conventional heat-directing elements. Similarly, in various embodiments, when located on an exterior surface of a piece of body wear, the holographic heat-directing elements disclosed herein may direct a greater percentage of the incident heat away from the body of the user, when compared to conventional heat-directing elements.

Additionally, holographic heat-directing elements, particularly those affixed to the base fabric using heat-stamping techniques as described below, may not be easily removed in their entireties because of the very thin and fragile nature of the foil. Thus, in various embodiments, such holographic heat-directing elements also may serve an additional purpose of serving as an indication of a source for the body wear, for instance, by incorporating a logo or other identifying word or image into the holographic foil, which may make it easier to detect and/or deter counterfeiting in some embodiments. In various embodiments, the heat-directing elements disclosed herein may be permanently coupled to the base fabric in a variety of ways, including, but not limited to gluing, heat pressing, printing, or stitching. In some embodiments, the heat-directing elements may be coupled to the base fabric by frequency welding, such as by radio or ultrasonic welding.

In some embodiments wherein the heat-directing elements are holographic elements, the heat-directing elements may be coupled to the base fabric using a process described in U.S. Patent No. 5,464,690. Briefly, in some embodiments, a holographic foil made from a composite sheet having a holographic image applied thereto may be transferred from a carrier film (such as a polyester, polypropylene, or similar material) to a substrate (such as the base fabric disclosed herein) where it may be affixed by an adhesive film opposite the carrier film using a heat-stamping process. Modifications to this process, such as those described in U.S. Patent Nos. 5,674,580; 5,643,678; 5,653,349; and 6,638,386, also may be used to affix the holographic heat-directing elements to the base fabric in various embodiments. Other embodiments may make use of a holographic thermal transfer ribbon for enabling the transfer of a hologram using a thermal transfer demand printer, as disclosed in U.S. Patent No. 5,342,672.

In various embodiments, the heat-directing properties of the heat-directing elements may be influenced by the composition of the base fabric or the overall construction of the body gear. For example, a base fabric may be used that has significant insulating properties. When paired with heat-directing elements that have heat reflective properties, the insulative backing/lining may help limit any conductivity that may naturally occur and enhance the reflective properties of the heat-directing elements. In another example, the base fabric may provide little or no insulative properties, but may be coupled to an insulating layer disposed on the side of the base fabric opposite the heat-directing material elements. The separate insulation layer may help reduce the potential for heat conductivity of the elements and enhance their reflectivity. In some embodiments, the heat-directing elements may become more conductive as the air layer between the garment and the wearer becomes more warm and humid. Such examples may be suitable for use in cold weather applications, for instance.

In various embodiments, a base fabric may be used that has little or no insulative properties. When paired with heat-directing elements that are primarily configured to conduct heat, as opposed to reflecting heat, the base fabric and heat-directing elements may aid in removing excess body heat generated in warmer climates or when engaging in extreme physical activity. Such embodiments may be suitable for warm weather conditions.

In various embodiments, the heat-directing elements may be applied in a pattern or a continuous or discontinuous array defined by the manufacturer. For example, as illustrated in **Figures 1A -1E**, heat-directing elements **10**, may be a series of dot-like heat reflective (or heat conductive) elements adhered or otherwise secured to the base fabric **20** in a desired pattern. Such a configuration has been found to provide heat reflectivity and thus warmth to the user (e.g., when heat reflective elements are used), or, in the alternative, heat conduction and thus cooling to the user (e.g., when heat conductive elements are used), while still allowing the base fabric to perform the function of the desired one or more properties (e.g. breathe and allow moisture vapor to escape through the fabric in order to reduce the level of moisture build up).

Although the illustrated embodiments show the heat-directing elements as discrete elements, in some embodiments, some or all of the heat-directing elements may be arranged such that they are in connection with one another, such as a lattice pattern or any other pattern that permits partial coverage of the base fabric.

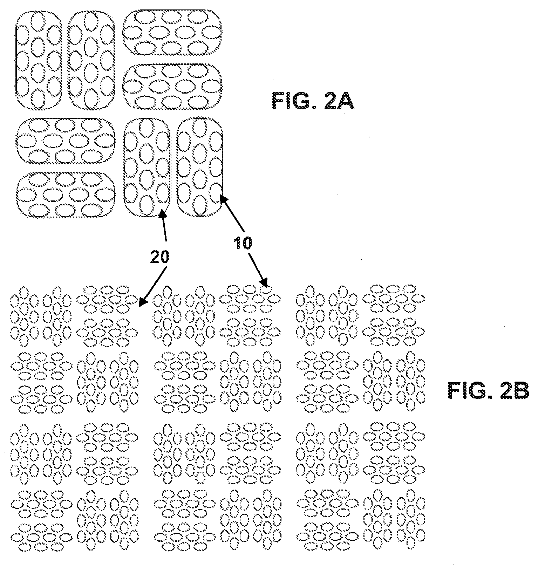

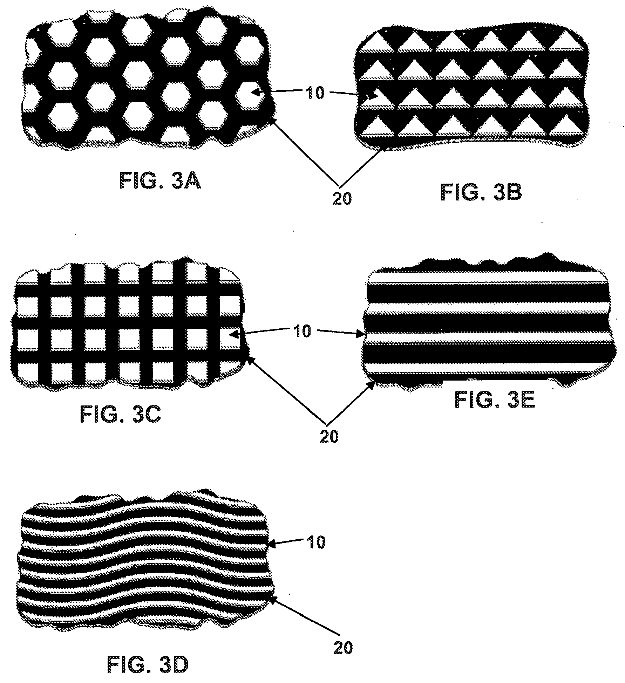

In various embodiments, the configuration or pattern of the heat-directing elements themselves may be selected by the user and may take any one of a variety of forms. For example, as illustrated in **Figures 2A-2B****, 3A-3E**, and **4-6**, the configuration of the heat-directing elements **10** disposed on a base fabric **20** used for body gear may be in the form of a variety of geometrical patterns (e.g. lines, waves, triangles, squares, logos, words, etc.)

In various embodiments, the pattern of heat-directing elements may be symmetric, ordered, random, and/or asymmetrical. Further, as discussed below, the pattern of heat-directing elements may be disposed on the base material at strategic locations to improve the performance of the body wear. In various embodiments, the size of the heat-directing elements may also be varied to balance the need for enhanced heat-directing properties and preserve the functionality of the base fabric.

In various embodiments, the density or ratio of the surface area covered by the heat-directing elements to the surface are of base fabric left uncovered by the heat-directing elements may be from about 3:7 (30%) to about 7:3 (70%). In various embodiments, this range has been shown to provide a good balance of heat management properties (e.g., reflectivity or conductivity) with the desired properties of the base fabric (e.g., breathability or wicking, for instance). In particular embodiments, this ratio may be from about 4:6 (40%) to about 6:4 (60%).

In various embodiments, the placement, pattern, and/or coverage ratio of the heat-directing elements may vary. For example the heat-directing elements may be concentrated in certain areas where heat management may be more critical (e.g. the body core) and non existent or extremely limited in other areas where the function of the base fabric property is more critical (e.g. area under the arms or portions of the back for wicking moisture away from the body). In various embodiments, different areas of the body gear may have different coverage ratios, e.g. 70% at the chest and 30% at the limbs, in order to help optimize, for example, the need for warmth and breathability.

In various embodiments, the size of the heat-directing elements may be largest (or the spacing between them may be the smallest) in the core regions of the body for enhanced reflection or conduction in those areas, and the size of the heat-directing elements may be the smallest (or the spacing between them may be the largest) in peripheral areas of the body. In some embodiments, the degree of coverage by the heat-directing elements may vary in a gradual fashion over the entire garments as needed for regional heat management. Some embodiments may employ heat reflective elements in some areas and heat conductive elements in other areas of the garment.

In various embodiments, the heat-directing elements may be configured to help resist moisture buildup on the heat-directing elements themselves and further enhance the function of the base fabric (e.g. breathability or moisture wicking). In one embodiment, it has been found that reducing the area of individual elements, but increasing the density may provide a better balance between heat direction (e.g. reflectivity or conductivity) and base fabric functionality, as there will be a reduced tendency for moisture to build up on the heat-directing elements. In some embodiments, it has been found that keeping the surface area of the individual heat-directing elements below 1 cm² can help to reduce the potential for moisture build up. In various embodiments, the heat-directing elements may have a maximum dimension (diameter, hypotenuse, length, width, etc.) that is less than or equal to about 1 cm. In some embodiments, the maximum dimension may be between 1-4 mm. In other embodiments, the largest dimension of a heat-directing element may be as small as 1 mm, or even smaller.

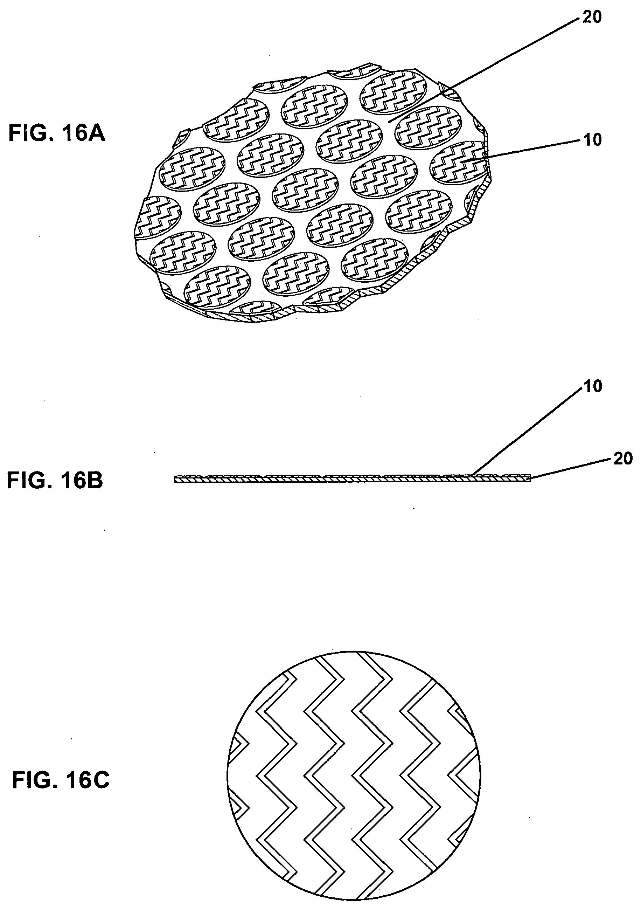

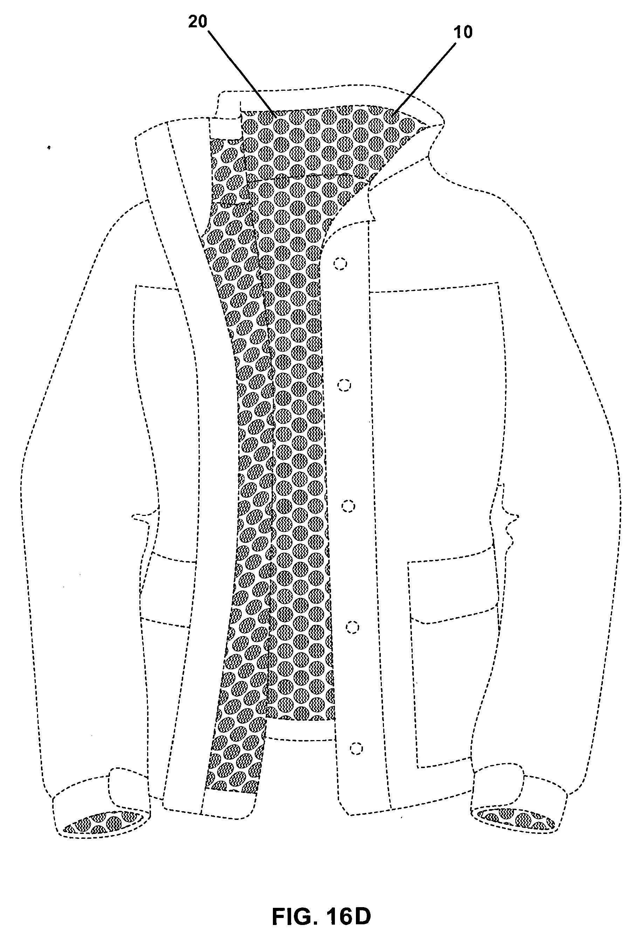

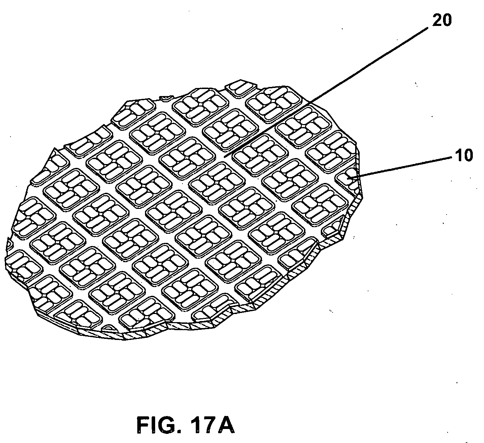

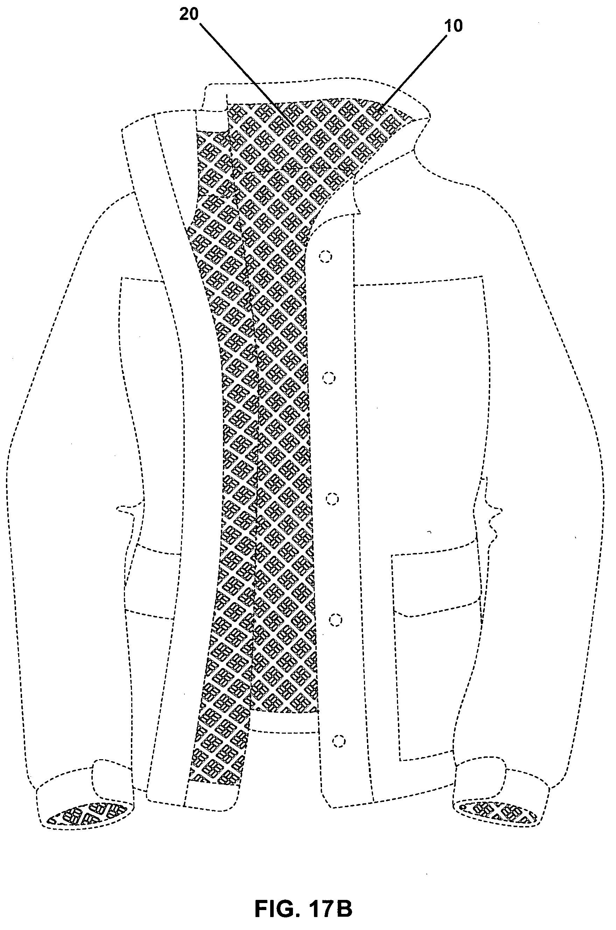

In some embodiments, for instance when the heat-directing elements are holographic elements, the size and shape of the heat-directing elements may be selected to suit the particular hologram etched on the foil, for instance a logo, company name, picture, or other insignia. For example, the size of the heat-directing element may be selected to be large enough such that the hologram is visible to a user, for instance a holographic font may be large enough to be read without the need for additional equipment. Thus, in some embodiments, a holographic heat-directing element may be about 1 cm or larger, for instance, 2, 3, 4, or even 5 cm. **Figures 16A-****16D** illustrate examples of such holographic patterned heat-directing elements disposed on a base fabric or material in a perspective view (**Figure 16A**), in a cross-sectional view (**Figure 16B**), in a face view (**Figure 16C**), and in use in a jacket lining (**Figure 16D**); **Figures 17A** and **17B** illustrate another example of holographic patterned heat-directing elements disposed on a base fabric or material in a perspective view (**Figure 17A****),** and in use in a jacket lining (**Figure 17B**), all in accordance with various embodiments.

In various embodiments, holographic heat-directing elements may be configured in an inverse pattern from that shown in **Figure 1**, with the heat-directing elements forming a lattice or other interconnected pattern, with base fabric appearing as a pattern of dots or other shapes. For example, **Figures 18A** and **18B** illustrate a lattice-pattern of holographic patterned heat-directing elements disposed on a base fabric or material in a perspective view (**Figure 18A**), and in use in a jacket lining (**Figure 18B**), in accordance with various embodiments. Although a lattice pattern is illustrated, one of skill in the art will appreciate that any pattern or combination of patterns may be employed.

In some embodiments, the topographic profile of the individual heat-directing elements can be such that moisture is not inclined to adhere to the heat-directing element. For example, the heat-directing element may be convex, conical, fluted, or otherwise protruded, which may help urge moisture to flow towards the base fabric. In some embodiments, the surface of the heat-directing elements may be treated with a compound that may help resist the build up of moisture vapor onto the elements and better direct the moisture to the base fabric without materially impacting the thermal directing property of the elements. One such example treatment may be a hydrophobic fluorocarbon, which may be applied to the elements via lamination, spray deposition, or in a chemical bath.

In various embodiments, the heat-directing elements may be removable from the base fabric and reconfigurable if desired using a variety of releasable coupling fasteners such as zippers, snaps, buttons, hook and loop type fasteners (e.g. Velcro), and other detachable interfaces. Further, the base material may be formed as a separate item of body gear and used in conjunction with other body gear to improve thermal management of a user's body heat. For example, an upper body under wear garment may be composed with heat-directing elements in accordance with various embodiments. This under wear garment may be worn by a user alone, in which case conduction of body heat away from the user's body may typically occur, or in conjunction with an insulated outer garment which may enhance the heat reflectivity of the user's body heat.

In various embodiments, the heat-directing elements may be applied to the base fabric such that it is depressed, concave, or recessed relative to the base fabric, such that the surface of the heat-directing element is disposed below the surface of the base fabric. This configuration may have the effect of improving, for example, moisture wicking, as the base fabric is the portion of the body gear or body gear lining that engages the user's skin or underlying clothing. Further, such contact with the base fabric may also enhance the comfort to the wearer of the body gear in applications where the skin is in direct contact with the base fabric (e.g. gloves, mittens, underwear, or socks).

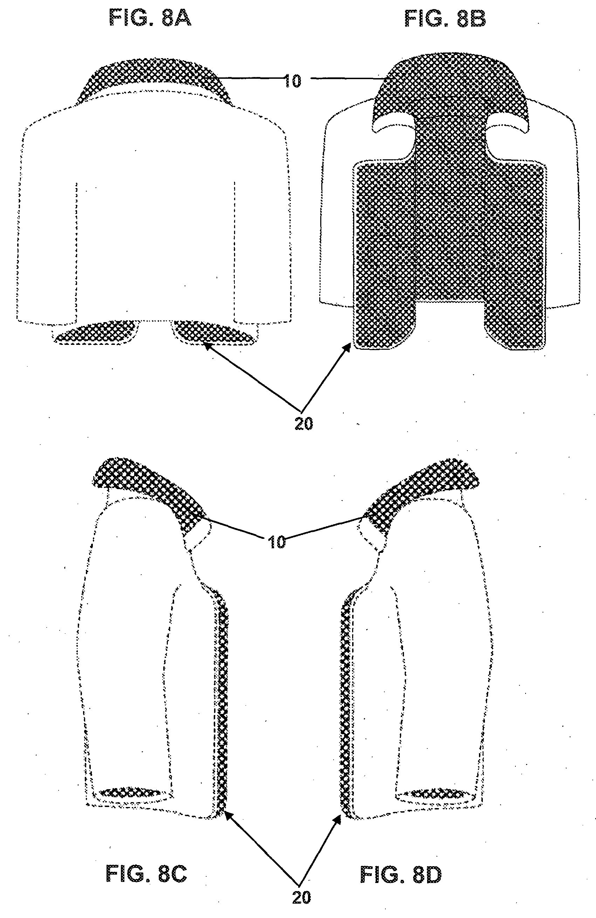

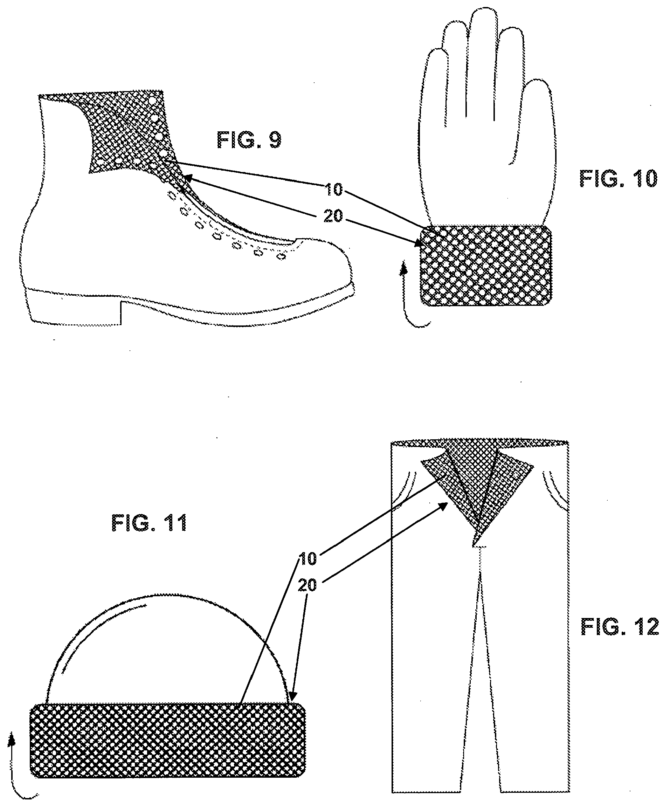

**Figures 8-15** illustrate various views of a patterned heat management fabric used in a variety of body gear applications, such as a jacket **(****Figures 8A-D)**, boot **(****Figure 9****)**, glove **(****Figure 10****)**, hat **(****Figure 11****)**, pants **(****Figure 12****)**, sock **(****Figure 13****)**, sleeping bag (**Figure 14**), tent rain fly (**Figure 15A**) and tent (**Figure 15B**). Each of the body gear pieces illustrated include a base material **20** having a plurality of heat-directing elements **10** disposed thereon.

While the principle embodiments described herein include heat-directing elements that are disposed on the inner surface of the base fabric, in various embodiments, the heat-directing elements may be used on the outside of body gear, for instance to reflect or direct heat exposed to the outside surface of the gear. For instance, in some embodiments, base fabric and heat reflective elements, such as those illustrated in **Figures 1B-3E**, may be applied to an outer or exterior surface of the body gear, such as a coat, sleeping bag, tent or tent rain fly, etc in order to reflect heat away from the user.

In some embodiments, the body gear may be reversible, such that a user may determine whether to use the fabric to direct heat toward the body or away from the body. An example of such reversible body gear is illustrated in **Figure 15A**. In this embodiment, the heat-directing elements may be included on one side of a tent rain fly. In one embodiment, the rain fly may be used with the heat-directing elements facing outward, for example in hot weather or sunny conditions, in order to reflect heat away from the body of the tent user. Conversely, in cold weather conditions, for example, the tent rain fly may be reversed and installed with the heat-directing elements facing inward, toward the body of a user, so as to reflect body heat back toward the tent interior. Although a tent rain fly is used to illustrate this principle, one of skill in the art will appreciate that the same concept may be applied to other body gear, such as reversible jackets, coats, hats, and the like. **Figure 15B** illustrates an example wherein at least a portion of the tent body includes a fabric having a plurality of heat-directing elements disposed thereon. In the illustrated embodiment, the heat reflective elements are facing outward and may be configured to reflect heat away from the tent and thus away from the body of the tent user. In other embodiments, the elements may be configured to face inward.

Although certain embodiments have been illustrated and described herein, it will be appreciated by those of ordinary skill in the art that a wide variety of alternate and/or equivalent embodiments or implementations calculated to achieve the same purposes may be substituted for the embodiments shown and described without departing from the scope of the present invention. Those with skill in the art will readily appreciate that embodiments in accordance with the present invention may be implemented in a very wide variety of ways. This application is intended to cover any adaptations or variations of the embodiments discussed herein. Therefore, it is manifestly intended that embodiments in accordance with the present invention be limited only by the claims and the equivalents thereof.

## Claims

1. A holographic heat management material adapted for use with body gear, comprising:
a base material (20) having a transfer property that is adapted to allow, impede, and/or restrict passage of a natural element through the base material;
an array of heat-directing elements (10) coupled to a first side of the base material (20), the heat-directing elements (10) being positioned to direct heat in a desired direction, and
wherein the placement and spacing of the heat-directing elements (10) helps enable the base material to perform the element transfer property,
**characterized by** that the heat-directing elements (10) are holographic heat directing elements (10).

2. The holographic heat management material of claim 1, wherein the base material (20) comprises an innermost layer of the body gear, and wherein the holographic heat-directing elements (10) are positioned to face inward and direct heat towards the body of a body gear user.

3. The holographic heat management material of claim 1, wherein the base material (20) is a moisture-wicking fabric, or comprises one or more insulating or waterproof materials.

4. The holographic heat management material of claim 1, wherein the base material (20) is coupled to an insulating or waterproof material disposed on an opposite side as the holographic heat-directing elements (10).

5. The holographic heat management material of claim 1, wherein the surface area ratio of holographic heat-directing elements (10) to base material (20) is from 7:3 to 3:7.

6. The holographic heat management material of claim 1, wherein the surface area ratio of holographic heat-directing elements (10) to base material (20) is from 3:2 to 2:3.

7. The holographic heat management material of claim 1, wherein the holographic heat-directing elements (10) comprise a laser-etched layer.

8. The holographic heat management material of claim 7, wherein the holographic heat-directing elements (10) comprise a metal or metal alloy.

9. The holographic heat management material of claim 1, wherein the holographic heat-directing elements (10) have a maximum dimension of less than 5 cm.

10. The holographic heat management material of claim 1, wherein the holographic heat-directing elements (10) are treated with a hydrophobic material to resist moisture build up on the holographic heat-directing elements (10).

11. The holographic heat management material of claim 1, wherein the holographic heat-directing elements (10) have a maximum spacing of less than 1 cm.

12. The holographic heat management material of claim 1, wherein the holographic heat-directing elements (10) have a minimum spacing of more than 1 mm.

13. The holographic heat management material of claim 1, wherein the holographic heat-directing elements (10) are heat-stamped.

14. The holographic heat management material of claim 1, wherein the holographic heat-directing elements (10) are recessed into the base material (20) such that the outer surface of the holographic heat-directing element (10) is below the surface of the base material.

15. The holographic heat management material of claim 1, wherein the holographic heat-directing elements (10) comprise a holographic image.

## Patentansprüche

1. Holographisches Wärmemanagementmaterial, das zur Verwendung mit am Körper getragener Ausrüstung ausgelegt ist, umfassend:
ein Basismaterial (20) mit einer Übertragungseigenschaft, die dazu ausgelegt ist, den Durchlass eines natürlichen Elements durch das Basismaterial zu ermöglichen, zu hindern und/oder zu beschränken;
eine Anordnung von wärmelenkenden Elementen (10), die mit einer ersten Seite eines Basismaterials (20) gekoppelt sind, wobei die wärmelenkenden Elemente (10) so angeordnet sind, dass sie Wärme in eine gewünschte Richtung lenken, und
wobei die Anordnung und Beabstandung der wärmelenkenden Elemente (10) dem Basismaterial helfen, die Elementübertragungseigenschaft durchzuführen,
**dadurch gekennzeichnet, dass** es sich bei den wärmelenkenden Elementen (10) um holographische wärmelenkende Elemente (10) handelt.

2. Holographisches Wärmemanagementmaterial gemäß Anspruch 1, wobei das Basismaterial (20) eine innerste Schicht der am Körper getragenen Ausrüstung umfasst und wobei die holographischen wärmelenkenden Elemente (10) so angeordnet sind, dass sie nach innen gewandt sind und Wärme zum Körper einer Person, die die am Körper getragene Ausrüstung verwendet, leitet.

3. Holographisches Wärmemanagementmaterial gemäß Anspruch 1, wobei es sich bei dem Basismaterial (20) um einen feuchtigkeitstransportierenden Stoff handelt, der wenigstens ein isolierendes oder wasserdichtes Material umfasst.

4. Holographisches Wärmemanagementmaterial gemäß Anspruch 1, wobei das Basismaterial (20) mit einem isolierenden oder wasserdichten Material gekoppelt ist, das an einer den wärmelenkenden Elementen (10) gegenüber liegenden Seite angeordnet ist.

5. Holographisches Wärmemanagementmaterial gemäß Anspruch 1, wobei das Oberflächenverhältnis von holographischen wärmelenkenden Elementen (10) zu Basismaterial (20) zwischen 7:3 und 3:7 liegt.

6. Holographisches Wärmemanagementmaterial gemäß Anspruch 1, wobei das Oberflächenverhältnis von holographischen wärmelenkenden Elementen (10) zu Basismaterial (20) zwischen 3:2 und 2:3 liegt.

7. Holographisches Wärmemanagementmaterial gemäß Anspruch 1, wobei die holographischen wärme lenkenden Elemente (10) eine lasergeätzte Schicht umfassen.

8. Holographisches Wärmemanagementmaterial gemäß Anspruch 7, wobei die holographischen wärmelenkenden Elemente (10) ein Metall oder eine Metalllegierung umfassen.

9. Holographisches Wärmemanagementmaterial gemäß Anspruch 1, wobei die holographischen wärmelenkenden Elemente (10) maximale Abmessungen von weniger als 5 cm aufweisen.

10. Holographisches Wärmemanagementmaterial gemäß Anspruch 1, wobei die holographischen wärmelenkenden Elemente (10) mit einem hydrophoben Material behandelt sind, um einen Feuchtigkeitsaufbau an den holographischen wärmelenkenden Elementen (10) zu verhindern.

11. Holographisches Wärmemanagementmaterial gemäß Anspruch 1, wobei die holographischen wärmelenkenden Elemente (10) eine maximale Beabstandung von weniger als 1 cm aufweisen.

12. Holographisches Wärmemanagementmaterial gemäß Anspruch 1, wobei die holographischen wärmelenkenden Elemente (10) eine minimale Beabstandung von mehr als 1 mm aufweisen.

13. Holographisches Wärmemanagementmaterial gemäß Anspruch 1, wobei die holographischen wärmelenkenden Elemente (10) wärmegepresst sind.

14. Holographisches Wärmemanagementmaterial gemäß Anspruch 1, wobei die holographischen wärmelenkenden Elemente (10) in das Basismaterial (20) eingelassen sind, so dass die äußere Oberfläche der holographischen wärmelenkenden Elemente (10) sich unter der Oberfläche des Basismaterials befindet.

15. Holographisches Wärmemanagementmaterial gemäß Anspruch 1, wobei die holographischen wärmelenkenden Elemente (10) ein holographisches Bild umfassen.

## Revendications

1. Matière holographique à gestion thermique conçue pour être employée dans un équipement corporel, comprenant :
une matière de base (20) présentant une propriété de transfert conçue pour permettre, empêcher et/ou limiter le passage d'un élément naturel à travers la matière de base ;
un ensemble d'éléments directeurs de chaleur (10) couplés à une première face d'une matière de base (20), les éléments directeurs de chaleur (10) étant disposés de manière à diriger de la chaleur dans une direction souhaitée, et
dans laquelle la disposition et l'écartement des éléments directeurs de chaleur (10) visent à permettre la réalisation de la propriété de transfert de l'élément par la matière de base,
**caractérisée en ce que** les éléments directeurs de chaleur (10) consistent en des éléments holographiques directeurs de chaleur (10).

2. Matière holographique à gestion de chaleur selon la revendication 1, dans laquelle la matière de base (20) comprend une couche intérieure de l'équipement corporel, et dans laquelle les éléments holographiques directeurs de chaleur (10) sont disposés pour être tournés vers l'intérieur et diriger la chaleur vers le corps de l'utilisateur de l'équipement corporel.

3. Matière holographique à gestion de chaleur selon la revendication 1, dans laquelle la matière de base (20) est un tissu à effet mèche et comprend au moins une matière isolante ou imperméable.

4. Matière holographique à gestion de chaleur selon la revendication 1, dans laquelle la matière de base (20) est couplée à une matière isolante ou imperméable disposée sur un côté opposé à celui des éléments holographiques directeurs de chaleur (10).

5. Matière holographique à gestion de chaleur selon la revendication 1, dans laquelle le rapport de surface entre les éléments holographiques directeurs de chaleur (10) et la matière de base (20) va de 7:3 à 3:7.

6. Matière holographique à gestion de chaleur selon la revendication 1, dans laquelle le rapport de surface entre les éléments holographiques directeurs de chaleur (10) et la matière de base (20) va de 3:2 à 2:3.

7. Matière holographique à gestion de chaleur selon la revendication 1, dans laquelle les éléments holographiques directeurs de chaleur (10) comprennent une couche gravée au laser.

8. Matière holographique à gestion de chaleur selon la revendication 7, dans laquelle les éléments holographiques directeurs de chaleur (10) comprennent un métal ou alliage métallique.

9. Matière holographique à gestion de chaleur selon la revendication 1, dans laquelle les éléments holographiques directeurs de chaleur (10) présentent une dimension maximale de moins de 5 cm.

10. Matière holographique à gestion de chaleur selon la revendication 1, dans laquelle les éléments holographiques directeurs de chaleur (10) sont traités par un matériau hydrophobe afin d'atténuer l'accumulation d'humidité sur les éléments holographiques directeurs de chaleur (10).

11. Matière holographique à gestion de chaleur selon la revendication 1, dans laquelle les éléments holographiques directeurs de chaleur (10) présentent un écartement maximum de moins de 1 cm.

12. Matière holographique à gestion de chaleur selon la revendication 1, dans laquelle les éléments holographiques directeurs de chaleur (10) présentent un écartement maximum de plus de 1 mm.

13. Matière holographique à gestion de chaleur selon la revendication 1, dans laquelle les éléments holographiques directeurs de chaleur (10) sont soumis à un estampage à chaud.

14. Matière holographique à gestion de chaleur selon la revendication 1, dans laquelle les éléments holographiques directeurs de chaleur (10) sont renfoncés dans la matière de base (20) de manière que la surface extérieure de l'élément holographique directeur de chaleur (10) se trouve en dessous de la surface de la matière de base.

15. Matière holographique à gestion de chaleur selon la revendication 1, dans laquelle les éléments holographiques directeurs de chaleur (10) comprennent une image holographique.
